# EUROPEAN PATENT SPECIFICATION

(11) **EP 1 384 405 B1**
(45) Date of publication and mention of the grant of the patent: **04.06.2008**
(21) Application number: 03077315.4
(22) Date of filing: 22.07.2003
(51) Int. Cl.: A01N 63/04

(54) **Bactericidal, bacteriostatic and fungicidal composition comprising two or more live species of trichoderma**
Bacterizide, bacteriostatische und fungizide Zusammensetzung enthaltend zwei oder mehr lebende Trichoderma Spezies
Composition bactéricide, bactériostatique et fongicide comprenant deux espèces vivantes de trichoderma ou davantage

(30) Priority: 26.07.2002 CL 16652002
(43) Date of publication of application: 28.01.2004
(73) Proprietor: Reyes Salinas, Mario, Providencia, Santiago (CL); Rencoret Holley, Juan, Providencia, Santiago (CL)
(72) Inventor: Reyes Salinas, Mario, Providencia, Santiago (CL); Rencoret Holley, Juan, Providencia, Santiago (CL)
(74) Representative: Davila Baz, Angel

(56) References cited:
- EP-A- 1 279 335
- WO-A-01/83706
- WO-A-95/20879
- WO-A-98/31220
- FR-A- 2 122 355
- FR-A- 2 436 564
- FR-A- 2 813 758
- US-A- 5 882 915
- P.BERNASCONI ET AL.: "Increase of Lysozyme and Chitinase in Rubus-Hispidus Calli Caused by Infection and some Polymers" PLANT SCIENCE (LIMERICK), vol. 44, no. 2, 1986, pages 79-84, XP009018535

## Description

The present invention describes a bactericidal, bacteriostatic and fungicidal composition, in powder, based on the coexistence, cohabitation and mutual repulsion of two or more live species of Trichoderma and its preparation procedure.

The composition of the present invention allows fungicidal and bacterial action on the majority of phytopathogens of agricultural importance at the foliar, radicular, vascular and/or in fruit level. Also this product is soluble in any type of water, using it for curative and/or preventive treatment in seeds, plants, ornamental and/or fruit trees, fruits, and earth.

The Trichoderma species were discovered in the late 40's and, since then, its potential has been explored as a fungal antagonist of phytopathogenic fungus. Today, more than 400 Trichoderma species are known, which are of easy isolation, but of difficult growing.

The antagonist activity for space and nutrients facing phytopathogenic fungus, including the facing of Trichoderma species; which is the reason why there are no mixtures of two or more live Trichoderma species, is widely documented in research centers both in Europe and in U.S.A.

The development of Trichoderma, until now, has been slow due to the impossibility to find a technique that allows its massive culture and due to the fact that it can only exist one Trichoderma species per culture.

Currently the way to obtain a Trichoderma species in the form of spores, is by means of fermentative culture in bioreactors, subsequent lyophilization and filtration of the obtained matter in a sieve that only lets the spores to pass though. Another way is to inoculate fine wheat flour with a Trichoderma species and then to dilute it using Diatomaceous earth and/or a clay matrix. These two methods are of low productivity and does not allow, due to the antagonistic characteristics of Trichoderma species, the production of two or more species together, and thus, there is no chance of obtaining lytic enzymes because these ones are produced only in the presence of other fungus.

The Trichoderma species exert violent antagonistic activity, in front of other fungus, included those of the same species, through the following mechanisms:
A. Release of volatile enzymes that denaturalize and digest the structure of the fungus with whom are competing.
B. Rapid anchorage to the substrate, allowing the reproductive structures (spores) of the fungus with whom they are competing, to become non feasible.
C. Establishing symbiosis with a live plant or vegetable structure to which they can microparasitize, releasing beneficial substances, to the host, usually micro traces of giberelic acid, and/or streptomycin when a slight bacterial attack exists in the host.

The mother preparations that currently exist in the international and national market are obtained by means of vegetative growing of Trichoderma species on a solid phase, and/or dextrose agar potatoes. After that, an inoculation is made in wheat germ, straw, diatomaceous earth, and/or a clay matrix. The formulated product only contains inactive spores of Trichoderma species in an inert excipient, usually diatomaceous earth.

Due to the characteristics of the way it is obtained, it must be maintained in a cold line until its use, otherwise, it denaturalizes, and can rapidly enter in a decomposing phase.

The product obtained using this method can only be used in a preventive phase, because the spores of a Trichoderma species must develop to start carrying out its antagonistic action on the pathogens, generally one, to control.

The formulated product, being made up by a Trichoderma species, has a very reduced action spectrum on complexes of phytopathogenic fungus. And, furthermore, if the population present of phytopathogens is very high, the product is not capable of controlling them because the aggressiveness of the phytopathogen prevents the development of Trichoderma spores which is the product's active principle.

The activity of the Trichoderma species contained in the product formulation as an active principle, when being applied in the field, is restricted both in its metabolic phase and vegetative growth by environmental factors, such as the water's pH, the chemical fungicides, the winds that dehydrate it, etc. Also by the location of phytopathogens to be controlled, having null action on radicular and medullar pathogens and an erratic action, mainly due to environmental conditions, on phytopathogens of fruit and foliage.

The product so formulated has no action on vascular pathologies, and can be fairly effective only if the logs are perforated to inoculate the preparation in the form of a bullet and/or injection.

In recent years attempts have been made to facilitate and to massify its use. It does exist in the world market preparations that contain a Trichoderma species in the form of a bullet, for diseases of the vascular type. Those must be applied through tree log perforation, with the consequent stress of the vegetal; this disseminate the disease when retiring the drill used to perforate the log and acts as catheter while inoculating healthy territories during the process of penetration and subsequent removal of it.

The use of this formulation is restricted to arborous and/or woody species and the method is not applicable to minor cultures like fruit and vegetable growing, for example beet, lettuce, strawberry, etc,.

Also exists compositions based on spores of one of a species of Trichoderma in aqueous solution, which deteriorates rapidly, in a term of hours, even in sealed cans, due to the fast proliferation of bacteria, giving it a penetrant odor, characteristic of the putrefaction. The same odor is present in solid preparations whose cold chain was broken.

The Trichoderma compositions available in the market comprise a Trichoderma specie, usually the Harzianum, in the form of a spore, existing no mixtures of two or more species of Trichoderma living together of fungicidal and fungistatic nature, due to its antagonistic nature already described.

In the actual state of the technique ,it doesn't exist background that show its potential use in medicine, human and veterinary, for the control of opportunist bacteria and/or fungus.

Document AU 8479301 is describes the production and use of enzymes induced from Trichoderma and bacteria for plant pest control and for industrial processes. This document differs from the present invention because bacteria are used to control bacteria.

Document NZ 335107 describes isolated cellulase Trichoderma from a Trichoderma Longibratum culture, with an estimated molecular weight of 105 kD. In this document, differing from the present invention, are obtained Trichoderma Longibratum and other species by a fermentative process and the isoenzymes are contained in the culture medium and must be purified, to each specie correspond an individual fermentator because they doesn't cohabit together.

In the document US 2028500 a process is described for the preparation of new culture media for plants, for its multiplication of fungal bio control. In this document, differing from the present invention, only could get to live together two or more variants of the same stump in fermentative residues.

In document CA 2304107 a process is described to provide impregnability to wood by means of a pre treatment with fungicals. In this document, differing from the present invention, is identified a method to protect transgenic trees from the attack of fungus, not of insects and bacteria.

In document WO 0183706 a microbiological pesticide is described, active against fungal pathogens of plants, and its preparation procedure. In this document, differing from the present invention, the product is based on spores, mycelium, or a mixture with fungicidal characteristics, using only Trichoderma Harzanium YC 459 (accession 0772BP). WO 01/84935 teaches the use of more than one Trichoderma species in a composition to increase its biocidal activity.

### DESCRIPTION OF THE INVENTION.

In the present invention compositions are described that include a combination of two or more natural or genetically modified Trichoderma species, by radioactive methods, or another form, original stumps of species and/or sub species of Trichoderma from any origin, natural or from laboratory, live and active in any of its vegetative growing phase, mycelium spores fractionated or in different proportions.

More specifically, in the present invention are described compositions that comprise a combination of three Trichoderma species, naturally or genetically modified by radioactive methods or other form, species original stumps, and/or Trichoderma subspecies, of any origin, natural or from laboratory, live and active in any of its vegetative growing phase, mycelium spores fractionated or in different proportions.

In the present invention are identified and selected the Trichoderma stumps that show separately an antagonistic power in front of a certain number of phytopathogenic fungus of economical interest. The identification of original stumps was made according to the criteria that define each species, contained in: "Moulds, their isolation, cultivation and identification", 1981, Dr. David Malloch, University of Toronto". According to this criterion, the selected stumps were: Trichoderma Viridae, Trichoderma Longibratum and Trichoderma Harziano.

Subsequently, they were cultivated in a traditional bio reactor, fed with glucose-maltose as to obtain an aqueous solution rich in secretions but poor in Trichoderma biomass. Chemical analysis allowed to determine the presence of lithycal iso enzymes that correspond to Carboxymethyl Cellulase, Quitanase, beta 1,3 Gluconase, beta Xylosidase, Xylanase and 6-pentil alfa Pirone. Once established the presence of the above described substances, a sieving was made, which allowed to pick up the stumps present in this culture.

The stumps of these fungus were cultivated in a series of preparations according to the indications contained in "Moulds, their isolation, cultivation and identification", 1981, Dr. David Malloch, University of Toronto", until isolating each species in separated jars.

The need to maintain two or more live species and living together was established, with the objective of synergizing its action spectrum in front of phytopathogen, as well as the need of counting on with high concentrations of the lytic enzymes, already described, that would give a curative power to the final product. We started selecting a solid means of cultivation that allowed the rapid and harmonic growing of two or more species and capable to absorb the secretions released by these species when they attacked each other and subsequently to transfer it in an aqueous solution. The selected means was oat, which to avoid contamination, is previously sterilized and then incorporated in the culture.

To avoid the annihilation of the species when living together in the culture, a transformation was made by means of the exposition to radiation of the Trichoderma Longibratum stump, changing it by induced selection in a stump resistant to fungicidal secretions released by the two species of Trichoderma that are contained in the final product. More specifically, the Trichoderma Longibratum original species were subjected to micro expositions of Cobalt during 50 generations, obtaining a stump of unique characteristics.

The micro nutrient is selected after having tested the different means and possible combinations of them. Oat showed to be the means where two or more species of Trichoderma developed more efficiently, besides, it was capable of containing and subsequently transferring in an aqueous solution the lytic isoenzymes.

The execution of the definitive culture is made over a slightly hydrated layer of oat, which was inoculated with a mixture of two or more species. The micronized oat is subjected to sterilization by controlled exposition to microwaves to avoid the degradation of the fructose contained in its germ. The micronized oat as micro nutrient, complies the following functions:
Physical support: allows the fungus to grow on its surface, being able to establish at a glance the presence of any other undesired pathogen, or mutagenic changes of these undesired species.
Nutritional support: gives the fungus all of the nutritional requirements for its development.
Thermal insulation: During the growing process of the fungus, a series of exothermal reactions are realized, product of the catabolism of them and of reactions that occur between the different enzymes that they release and the attack of them to the sugars contained in the oat.
Buffer solution: The final product in aqueous solution acts like a buffer solution, for alkaline waters.
Foam: during the stage of culture of the two or more Trichoderma species that give rise to the final product, the oat is capable to absorb the lytic secretions released by Trichoderma during the antagonism process. These secretions, now contained in the oat, are of a hydro soluble nature, for which in aqueous solution they integrate to it, abandoning almost totally the oat matrix.
Regulator of the interchange nitro - ammonium in the vegetal structure to be protected.
Absorber and transporter of the water soluble isoenzymes, that liberate the two or more species of Trichoderma when they assault each other while cohabiting in the same space.
Furthermore, it is incorporated to the substrate Rubus extract, which allows on one hand to give the composition a bacteriostatical bactericide condition and also allowing the culture to be free of opportunist bacteria.

The addition of hydro alcoholic extract of Rubus sp to the micronutrient is carried out in a concentration not less than 0.68 mg/ml.

To increase even more its action spectrum, hydro alcoholic extract of Rubus sp is selected, whose components have shown an important bacteriostatical bactericide action. The generated product results of a bacteriostatical bactericide fungicidal power by the contributed secretions and the activity developed by the contained Trichoderma species. The entomicidal action stems from the invasion of the digestive-respiratory system of larvae, nymphs, adults and/or on infesting the egg of different species; it also has been reported that the entomicidal action is powered by the hydro alcoholic extract of Rubus that has the bacteriostatical bactericide characteristics also is teratogenic to the insects that are exposed to them, the eggs in contact with these substances and/or the ovi posture made by females that had contacted the proper product are not viable.

Besides, other vegetal extracts can be utilized, such as: *Oenothera rosea* Aut., *Alaysia triphylla* (L. Herit) Brit., *Arenaria licopodioides* Wiild . Ex Schdl. And *Erodium cicutarium* (L.) L. Herit, *Birsonima cassifolia, Citrus limonia.*

The Trichoderma species correspond to filament type fungus that are antagonistic with other fungus, including the same species, mainly as: harzanium, viridae, polysporum, longibratum, koningii and variations of these obtained in laboratory and identified as T 22, Tr 115, Tr 116, KRL-Ag 2 (Rifai), including holoforms as Hypocrea, Podostroma. The majority of the sub species selected according to the degree of aggressiveness and survival capacity in field conditions. However, what is intended to protect is not the combination of two or more Trichoderma species, because this exists in nature and in commercial type preparations. What is intended to protect is the combination of two or more *live* Trichoderma species in any phase of vegetative growth, capable of releasing lytic enzymes of repulsion, to grow together in a means of culture and to be immune to the environmental conditions so they can exert its controlling action for a term not less than on day.

The species that conform the composition correspond to sub species selected for its high adaptability to the fluctuating conditions of the environment, what lets them to stay alive.

More specifically, the three selected Trichoderma species correspond to Trichoderma Harzianum, Trichoderma Viridae and Trichoderma Longibratum.

The compositions comprising the three live Trichoderma species are in the following proportions: 10:20:70 or 90:05:05.

The composition corresponds to the hydro alcoholic extract of Rubus sp., and the specific secretions contained in the micro nutrient post vegetative and metabolic growth of the Trichoderma species along with the live Trichoderma, resistant to environmental factors and are captured by the described method, and subsequently captured in aqueous solution.

The composition contains: a) lytic enzymes Carboximethyl cellulase, chitinase, b 1,3 gluconase, b xylosidase, xylanase; b) a high concentration of 6 pentyl alphapyrone (volatile lactone that gives off a penetrating coconut aroma, depending on the concentration of this, which gives the characteristic to our product); c) micro traces of Streptomycin and auxins, (the metabolites described in a) and b) are responsible in a cellular level of vacuolation, granulation, lysis and disintegration of the cell exposed to these secretions); d) a concentration not less than 0.68 mg/ml of active principles added in the hydro alcoholic extract of Rubus sp, that gives it the character bactericide and bacteriostatical.

The bactericide and bacteriostatical action of a very low spectrum is described in diverse studies (France, et al, 2001; Stefanova M, 1995, Fernandez, 2001) and is due to the release of Streptomycin under the presence of bacteria, exerting an action on Streptomycin sensitive bacteria, which represent a very small spectrum, being the reason of the addition of extract of Rubus to the culture. This extract has a very high action spectrum on bacteria, with no action on fungus with what it is allowed a growth of Trichoderma without problems.

The Trichoderma Longibratum previously treated with radiotherapy, resulted immune to the secretions released by species Harzianum and Viridae.

These secretions are deactivated by the presence of metabolites that are released by the Longibratum that change the pH of the medium allowing the absorption of the secretions by the oat. These enzymes are of the thermo labile type and, in the oat are deactivated without degrading. When the culture has reached the maximum growth, the fungus containing trays are harvested and immediately diluted in substrate, what allows the fungus to grow more slowly and the dilution of the enzymes that could affect the fungus structure during the aging of the product.

When being in conditions differing to the culture, for example as an already canned product, the growth rate decreases dramatically.

The species that conform the composition correspond to select species for its high adaptability to fluctuating conditions of the environment, which allow them to stay alive. This adaptability lets them to exert its antagonistic action in front of the pathogenic fungus during the period of 20 days. The secretions contained in the micro nutrient, in a biologically active concentration, are of two types:
Fungicides: contributed by Trichoderma and represented mainly by 6 pentyl alpha Pyrone, Carboximethylcellulase, chitinase, beta 1,3 Gluconase, beta Xylosidase, and 1,4 beta Xylanase that destroys the pathogen fungus structure.

Bacteriostatical Bactericide: contributed by the hydro alcoholic extract of Rubus, represented mainly by the chemical constituents, can be observed according to Costa (1994), free acids; peptic substances; ascorbic, folic, acetic, caproic, and benzoic acids, as well as cumarines. To this, it must be added the Streptomycin released by Trichodermas in the presence of bacteria.

Due to its wide fungicidal, bactericide, bacteriostatic and entomicide spectrum, the contained secretions, the micro nutrient and active and alive Trichoderma biomass, exert actions:
Curative: on mixing the product in water, the micro nutrient releases all the secretions contained in it, which are soluble in water, also the live and active Trichoderma in all of its growth phases. These secretions are fungicides of greater power than those derived of the families of chemical fungicides. Also, the contribution of substances contained in the hydro alcoholic extract of Rubus sp, gives to the formulated product the characteristics bacteriostatic bactericide.

The mother structure of the lactones (R=C₂H₅ and R=CH₃) presents two active sites of biological unit, which lets a contact action, but also a trans laminar action, being able to reach the center of the leaf, while maintaining an unfavorable means for the proliferation of pathogens. In insects, this structure also causes the release of the gamma amino butyric acid, inducing a massive migration of chlorine ions to the interior of the cells in the insects, inducing a paralysis that causes its death. The other lytic secretions already described affect the structure of hifas (cellular filaments) and reproductive units of fungus, maintaining a sustained activity for a period of 20 days, before starting to degrade.

The traditional fungicides have in their molecules an active site of biological activity, for what it is easier for the fungus to acquire a resistance/tolerance due to the fact that the plague is subjected to a variable.

Field tests were made on different plants affected by rhyzochtonia, fusarium, silver, sclerotinia, botrytis, bacterial cancer, infection by pseudomonas, all of them in an advanced degree whose only indication was to rip off the plants. A treatment in doses of 2 kilograms of the composition of the present invention per hectare, with a dilution of up to 600 liters of water, and applied with back pumps and/or machinery, depending on the affected extension and type of vegetal. The evaluation was made two days afterwards, visualizing an inhibition of the growth of the pathogen(s) that were present in the plant(s). The control of the experience was maintained for 26 days, determining that the day 21 the action of the composition started to decay, becoming apparent a growth of pathogens and/or a new re infection, obtaining at day 26 a control inferior to 60% of the phytopathogen population. This margin of control allowed, for commercial purposes, to establish a curative action dose of 2 kilos of the composition formulated with dilution in any type of water, of up to 600 liters, giving a residual effect of 20 days.

Curative and preventive: In cultures that historically have had losses because of fungo bacterial attacks, in spite of the use of chemical fungicides, the present invention composition was applied in doses of 1 kg per hectare with wetting up to 600 liters of water. In seeds, it was established that the historical percentage of plants fall due to attacks from fungus complexes (dumping off), was reduced from 40% to 5% with the use of the composition. In greater (fruit trees) and minor (vegetables) cultures, it was established that applying the present invention composition two or three days before a rain, and/or immediately after it, the percentage of opportunist fungus (oidium, botrytis, mildew, eschlerotinium, cladiosporum) attacks is reduced from 90% to 3% using the composition, while maintaining the control for a time period of 20 days(residual effect).

The curative and preventive action of the present invention composition is in front of fitopathogens, single or associated to fungus complexes and/or fungus-bacteria associations, such as botrytis, oidium, silver, chlorotic rolling up, rhizochtonia, corky root, bacterial cancer, cladiosporum, fusarium, acid rot, armilary, tapiar cerasi, monilinia, verticillium, roya, agrobacterium tumefaciens, citosporiosis, wilsonomyce carpophilus, phytophthora, elsinoe veneta, septoria rubi, fumagina, didymella sp, erwinia sp, alternaria sp, sclerotinia, mildew, macrophomina sp, aerobic and anaerobic bacteria sensitive to Streptomycin, in general macrolids, in particular cyclosporin and/or Rubus sp extract.

The preventive action of the present invention composition is obtained when the fungicidal enzymes denaturalize, the Trichoderma species have already colonized the area, and start its antagonistic action facing to fungus populations that could left, as well as also avoiding the new re infestation of them by the spores that could arrive by environmental factors and/or farming jobs.

The insecticidal or entomicidal action of the present invention composition is described for the lepidopteran species as rhyacionia buoliana and other pathogenic insects, for example margaroe sp, of a complete or incomplete larval cycle, sensitive to the exotoxins released by the composition. These infect the egg making it non viable and can infect even the individual when he feeds itself with vegetables polluted with these micro toxins.

The present invention composition that comprises two or more active and live Trichoderma species in different stages of vegetative growth, along with the secretions contained in the previously hydrated nutrient with a concentration of the hydro alcoholic extract of Rubus sp, that is now called active biological excipient, allows a:
Control of medullar and/or vascular phytopathogens, bacteria isolated or in complexes, fungus isolated or in complexes, and/or fungus-bacteria complexes, only for foliar applications and drip irrigation, without the need to make drillings to introduce the product.
Secondary control on nematodes, on increasing the radicular mass of the plants and also decreasing the temperature of gestation of nematodes by half a grade.

Control of aerial phytopathogens for foliar applications, bacteria isolated or in complexes, fungus isolated or in complexes, and/or bacteria-fungus complexes. Applications were made to determine the doses, action spectrum, and residually of the formulated product. The presence of Streptomycin and the active principles contained in Rubus sp, at the laboratory level, resulted to be responsible of the bactericidal and bacteriostatic control. As the damage to the plant or fruit advances, produced by the primary infestation with a fungus, usually is a fertile field for other opportunist organisms, included insects, to arrive and to cohabit. The field tests with a dose of 1 to 2 kg (depending on the severity of the attack, always with maximal dilution of 600 liters of water), of the present invention composition per hectare, directly applied with back pump and/or machinery, to foliage and fruit, lets verify the wiping out action of the composition, which was maintained for 20 days.

Control of radicular phytopathogens in drip irrigation, bacteria isolated or in complexes, fungus isolated or in complexes, and/or fungus-bacteria complexes

Control of bacteria radicular phytopathogens, fungus and/or complexes of fungus-bacteria, The same as for the control of medullar and/or vascular phytopathogen, here the application is 2 kg per hectare, with wetting of foliage and tree log.

Secondary control on nematodes: It is widely documented that the Trichoderma releases giberelic acid in a sustained form; this is an important promoter of mitosis and meiosis, for what in the plants is obtained a greater radicular mass, that for a constant population of nematode is translated in a secondary control of this; on other hand, the micro nutrient contained in the aqueous solution, get to decrease the temperature in half a grade, for what a nematode eggs percentage are not viable.

The present invention composition can be applied to plants, trees and/or fruits in the form of a dry powder, by the volley technique, in seed impregnation, by means of an aqueous solution, directly to the plants, incorporated to fert-irrigation tanks, by means of back machines, pulverizing machines and electrostatic machines. Depending on the severity of the attack, the dose is 1 kg per hectare or 2 kg per hectare, for each 600 liters of water.

Also, a method is described to protect plants, soils, seeds, trees and/or fruits against the damage of a pest of insects, bacteria, fungus, viruses, and/or a combination of one or more of these agents, that comprises planting a plant procedure, which is obtained for any via in a latex base, that can have or not an added color, but must be free of chemical fungicides, 100 grams of the present invention composition, that includes a mixture of two or more Trichoderma species in different phases of vegetative growth, contained in a micro ionized nutritive support and is integrated, mixed by any means (including manual) until obtaining an homogeneous solution. Once defined the color for the latex, 10 grams of vegetal and/or organic colorant are added, previously dissolved in 1 liter of warm water. Depending on the required tonality, the colorant quantity can rise or go down.

The present invention composition is obtained by a preparation procedure that includes:
a) Initial sowing on trays containing the micro nutrient, micro ionized sterile, and hydrated in a hydro alcoholic extract of Rubus sp, with three Trichoderma species in the form of original spores, in the following proportions: Trichoderma Harzianum 50%, Trichoderma Viridae 30% and Trichoderma Longibratum(already irradiated) 20%.
b) Critical levels: the culture is handled in the following levels, pH 5, temperature 17°C to 22°C, with expositions of interrupted photo periods.
c) Ability of the nutrient to absorb, contain and deliver (in aqueous solution) the volatile secretions, product of the mutual repulsion of the species Harzianum and Viridae and the non volatile secretions of Trichoderma Longibratum together with its antibacterian ability contributed by the substances of bacteriostatic bactericidal nature contained in the hydro alcoholic extract of Rubus sp.
d) The presence of Trichoderma Longibratum in the culture allows a controlled release of antagonistic secretions and of a character fungi entomicidal bactericidal bacteriostatical, from its part and of the Trichoderma species Viridae and Harzianum, avoiding that they annihilate each other and maintaining a vegetative growth in all of their development phases and with all of the metabolic functions of the three species in the micro nutrient that contain hydro alcoholic extract of Rubus sp.
e) The generated biomass harvest implies the total collection of this by mechanical means, between days 4 and 7, its re sowing is made from this point, using live material in all of its vegetative growth phases at 1% or more with respect to the already hydrated nutrient over culture trays.

A method to protect plants, soils, seeds, trees and/or fruits against the damage of a pest of insects, bacteria, fungus, viruses, and/or a combination of one or more of these agents, that comprises planting a plant or transgenic trees, that express a specific substance of entomicidal, fungicidal, bactericidal, bacteriostatical, nematicidal nature and/or other enzymes characteristic of Trichoderma inside an area in which those pests can appear.

Besides, in the present invention a method is described to produce and/or formulate any fungicidal, bacteriostatic bactericidal product of wide spectrum, with foliar, radicular, vascular action and on fruits (including those already harvested); used in preventive and/or curative phase, even on naked earth and/or compost including any surface that permits the vegetal growth based on the mixture of two or more species of Trichoderma comprising:
a) The growth of one or more stumps of Trichoderma, (including viridae, harzianum and longibratum) on a solid culture.
b) The choice of oat as prime matter, and/or any derivative of it, in pure form or in
a mixture in any proportion, able to shoot the growth of two or more Trichoderma species containing or not hydro alcoholic extract of Rubus sp and/or vegetal extract or of any other origin with a bactericidal bacteriostatic potential that doesn't affect the growth of Trichoderma, with similar properties.

Additionally, in the present invention is described a composition that comprises two or more Trichoderma species, natural or genetically modified, by radioactive methods or other form, original stumps of species and/or sub species of Trichoderma, natural or from laboratory, to which is added a total hydro alcoholic extract of Rubus sp, or some of its components , in a mixture with natural or chemical substances aimed to obtain a bactericidal bacteriostatic and/or preserver, being that composition:
a. A composition formulated on the base of two or more Trichoderma stumps, with the addition of any synthetic substance, organic or inorganic, including the preservers and prepulsors of these substances, destined to give a bactericidal bacteriostatic characteristic, and/or any fungicidal substance in minor doses of the necessary to kill the Trichoderma culture, or fungicidal substances to which the selected Trichoderma species turn out to be immune, but sufficiently strong to give to said preparation a fungicidal character, as well as the incorporation of substances of any origin and nature, and/or instigators of bacteriostatic bactericidal action (including penicillin as impure extract of the prepulsor fungus and/or of commercial origin, macrolids, neomacrolids, cyclosporin, and any other therapeutical family of fungicidal bacteriostatic bactericidal already available in the market or that could be available in the next years.
b. A composition formulated on the base of two or more live and active Trichoderma species that due to its antagonistic character must have a separate commercial presentation, but must be mixed in the moment that are to be used in an immediate form or in a term non greater than 45 days after the application of the first species, all this with the objective of achieving an action spectrum wider than that given by any species and of any possible origin in any vegetative growth phase, that could or could not contain agents that give them the added properties as bacteriostatic bactericidal.

The present invention, besides, refers to a fungicide bacteriostatic bactericide formulation of wide spectrum with action on fungus and/or bacteria that are responsible of fungal diseases and/or bacteriosis on human beings and/or animals, as well as on bacteriosis and/or fungus that can infect foods, avoiding that way its growth and/or in curative phase on bacteria and/or fungus already installed, used in preventive and/or curative phase, which consists in a commercial presentation for confectionery that allows to introduce one or more live Trichoderma stumps and/or an extract of them, having lactones as active principle in a concentration enough to permit the inhibition of the fungus growth(as an example, penicillium and others) on bread in particular and on mass in general, once cooked, so extending its useful life.

### EXAMPLE 1

Preparation procedure for the composition that comprises two or more live Trichoderma species.

The stumps of Trichoderma Viridae, Trichoderma Longibratum and Trichoderma Harzianum were identified and selected, subsequently were cultivated in a traditional bioreactor fed with glucose-maltose to obtain an aqueous solution rich in secretions but poor in Trichoderma biomass and afterwards a sieving was made that allowed to pick up the spores present in this culture.

These fungus spores were cultivated over an oat layer previously sterilized by means of a controlled exposition to microwaves and slightly hydrated until reaching to isolate each species in a separate jar.

To avoid the annihilation of the species while living together in the culture, a transformation was realized by means of the exposition of the Trichoderma Longibratum stumps to radiation, transforming it by induced selection in a stump resistant to the fungicidal secretions that release the two Trichoderma species that are contained in the final product. More specifically, the original Trichoderma Longibratum species were subjected to micro expositions to Cobalt during 50 generations, obtaining a stump with unique characteristics.

Subsequently, the Rubus sp extract is incorporated in a concentration of no less than 0,68 mg/ml.

### EXAMPLE 2

Composition that comprises two or more live Trichoderma species.

Composition that comprises Trichoderma Harzianum, Trichoderma Viridae and Trichoderma Longibratum in the proportions: 10:20:70, or 99:05:05.

### EXAMPLE 3

Preparation procedure of the composition, based in latex and two or more live Trichoderma species.

An amount of 60 liters of a latex base, that can or cannot have added the color, is mixed with 100 grams of the example 1 composition and is stirred by any means (including manual agitation), until achieving an homogeneous solution. Once defined the color for the latex, are added 10 grams of vegetal and/or organic and/or inorganic colorant previously dissolved in 1 liter of warm water. Depending on the required tonality, the quantity of colorant can rise or go down.

### EXAMPLE 4

Composition based on latex that comprises two or more live Trichoderma species.

Composition based on latex that can or cannot have added the color, that comprises for each 60 liters of latex base, 100 grams of the composition of example 1.

## Claims

1. Bactericidal, bacteriostatic and fungicidal composition, **characterized in that** it comprises two or more live *Trichoderma* species selected among *Trichoderma harzianum, viridae, polysporum, longibratum, koningii* and variations of these, obtained in laboratory, on micronised oat as solid means of cultivation,_identified as T 22, Tr 115, Tr 116, KRL -AG 2 (Rifai), including holoforms as *Hypocrea* and *Podostroma,* where T. *longibratum* stump was transformed by means of the exposition to radiation before being contacted with other *Trichoderma* species.

2. Composition according to claim 1, **characterized in that** it comprises two or more Trichoderma species, natural or genetically modified, original stumps of Trichoderma species and sub species from any natural or laboratory origin, live and active in any of its vegetative growth phases, mycelium spores, fractionated or in different proportions.

3. Composition according to claims 1 to 2, **characterized in that** it comprises three live *Trichoderma* species.

4. Composition according to claims 1 to 3, **characterized in that** it comprises three live *Trichoderma* species selected from stumps *Trichoderma viridae, Trichoderma longibratum* and *Trichoderma harziano.*

5. Composition according to claims 1 to 4 **characterized in that** the three live *Trichoderma* species are in the proportions: 10:20:70 or 99:05:05.

6. Composition according to claims 1 to 5, **characterized in that** it comprises the three live *Trichoderma* species and a vegetal extract of bacteriostatic bactericidal nature.

7. Composition according to claims 1 to 6, **characterized in that** the extract is a Rubus sp hydro alcoholic extract.

8. Composition based on latex for pruning cicatrizing paint, **characterized in that** it comprises a latex base, that has a colour added, and a composition according to any of the claims 1 to 7.

9. Composition based on latex for pruning cicatrizing paint, **characterized in that** it comprises a latex base, that has no colour added, and a composition according to any of the claims 1 to 7.

10. Composition according to claims 8 and 9, **characterized in that** it comprises approximately 60 liters of said latex and 100 grams of said composition.

11. Use of the composition according to any of the preceding composition claims for protecting plants, soils, seeds, trees and/or fruits against the damage of a pest of insects, bacteria, fungus, viruses, and/or a combination of two or more of these agents.

12. Use according to claim 11, **characterized in that** it is applied in the form of dry powder or in the form of an aqueous suspension.

13. Use according to claims 11 or 12, **characterized in that** the application is made by means of the volley technique, in seed impregnation, directly on plants, incorporated to ferti-irrigation tanks, by means of back machines, pulverizing machines and electrostatic machines.

14. Use according to claims 11 to 13, **characterized in that** the applied dose is 1 kg per hectare, per each 600 liters of water.

15. Non therapeutic use of the composition to protect plants, soils, seeds, trees and/or fruits according to preceding composition claims 1 to 10, as fungicide bacteriostatic bactericide of wide spectrum with action on fungus, and/or bacteria, that are responsible of fungal diseases and/or bacteriosis on human begins, and/or animals and/or foods.

16. Use according to claim 15, **characterized in that** it can be used in the prevention phase and/or the curative phase.

17. Preparation procedure of the composition according to claims 1 to 6, **characterized in that** it comprises an initial sowing over trays that contains the micro nutrient in a vegetal extract, with two or more Trichoderma species in the form of reproductive original units, and the harvest of the biomass generated by mechanical means.

18. Preparation procedure according to claim 17, **characterized in that** the sowing comprises three Trichoderma species in the form of reproductive original units.

19. Preparation procedure according to claim 18, **characterized in that** the three *Trichoderma* species are selected from the stumps of *Trichoderma viridae, Trichoderma longibratum* and *Trichoderma harzianum.*

20. Preparation procedure according to claim 19, **characterized in that** the proportion of the three species is 50% *Trichoderma harzianum,* 30% *Trichoderma viridae* and 20% *Trichoderma longibratum*

## Patentansprüche

1. Bakterizide, bakteriostatische und fungizide Zusammensetzung, **dadurch gekennzeichnet, dass** sie mindestens zwei lebende *Trichoderma*-Arten aufweist, die aus *Trichoderma harzianum, viridae, polysporum, longibratum, koningii* und Variationen davon ausgewählt sind, im Labor auf mikronisiertem Hafer als festes Kultivierungsmittel erhalten wurden, als T 22, Tr 115, Tr 116, KRL-AG 2 (Rifai) identifiziert sind, einschließlich Holoformen wie *Hypocrea* und *Podostroma,* wobei der T. longibratum-Stamm durch Exposition gegenüber Strahlung transformiert wurde, bevor er in Kontakt mit anderen Trichoderma-Arten gebracht wird.

2. Zusammensetzung nach Anspruch 1, **dadurch gekennzeichnet, dass** sie mindestens zwei *Trichoderma-*Arten, natürlich oder genetisch modifizierte Originalstämme von *Trichoderma*-Arten und Unterarten jeglicher natürlicher Herkunft oder Laborherkunft, die in jeder der vegetativen Wachstumsphasen lebendig und aktiv sind, Myzelsporen, fraktioniert oder in verschiedenen Anteilen, aufweist.

3. Zusammensetzung nach Anspruch 1 bis 2, **dadurch gekennzeichnet, dass** sie drei lebende *Trichoderma*-Arten aufweist.

4. Zusammensetzung nach Anspruch 1 bis 3, **dadurch gekennzeichnet, dass** sie drei lebende Trichoderma-Arten aufweist, die aus den Stämmen *Trichoderma viridae, Trichoderma longibratum und Trichoderma harziano* ausgewählt sind.

5. Zusammensetzung nach Anspruch 1 bis 4, **dadurch gekennzeichnet, dass** die drei lebenden *Trichoderma*-Arten in den Anteilen 10:20:70 oder 99:05:05 vorliegen.

6. Zusammensetzung nach Anspruch 1 bis 5, **dadurch gekennzeichnet, dass** sie die drei lebenden *Trichoderma*-Arten und einen pflanzlichen Extrakt bakteriostatischer bakterizider Art aufweist.

7. Zusammensetzung nach Anspruch 1 bis 6, **dadurch gekennzeichnet, dass** es sich bei dem Extrakt um einen wässrigen alkoholischen Extrakt aus *Rubus* sp. handelt.

8. Zusammensetzung auf Latexbasis für eine Farbe für Gehölzschnittnarben, **dadurch gekennzeichnet, dass** sie eine Latexbasis aufweist, der eine Farbe zugegeben wurde, und eine Zusammensetzung nach einem der Ansprüche 1 bis 7.

9. Zusammensetzung auf Latexbasis für eine Farbe für Gehölzschnittnarben, **dadurch gekennzeichnet, dass** sie eine Latexbasis aufweist, der keine Farbe zugegeben wurde, und eine Zusammensetzung nach einem der Ansprüche 1 bis 7.

10. Zusammensetzung nach Anspruch 8 und 9, **dadurch gekennzeichnet, dass** sie etwa 60 Liter des Latex und 100 Gramm der Zusammensetzung aufweist.

11. Verwendung der Zusammensetzung nach einem der vorherigen Zusammensetzungsansprüche zum Schützen von Pflanzen, Böden, Saatgut, Bäumen und/oder Früchten vor der Schädigung durch Insekten-, Bakterien-, Pilz-, Virusschädlinge und/oder einer Kombination von mindestens zwei dieser Erreger.

12. Verwendung nach Anspruch 11, **dadurch gekennzeichnet, dass** sie in der Form eines trockenen Pulvers oder in der Form einer wässrigen Suspension aufgetragen wird.

13. Verwendung nach Anspruch 11 oder 12, **dadurch gekennzeichnet, dass** das Auftragen mittels "Volley"-Technik erfolgt, bei der Saatgutimprägnierung, direkt auf Pflanzen, in Fertirrigationstanks integriert, mittels "Back"-Maschinen, Pulverisierungsmaschinen und elektrostatischen Maschinen.

14. Verwendung nach Anspruch 11 bis 13, **dadurch gekennzeichnet, dass** je Hektar und je 600 Liter Wasser eine Dosis von 1 kg verwendet wird.

15. Nicht-therapeutische Anwendung der Zusammensetzung zum Schutz von Pflanzen, Böden, Saatgut, Bäumen und/oder Früchten nach den vorherigen Zusammensetzungsansprüchen als Fungizid, Bakteriostatikum, Bakterizidum mit breitem Wirkspektrum auf Pilze und/oder Bakterien, die Pilzerkrankungen und/oder Bakteriosen bei Kindern und/oder Tieren und/oder Lebensmitteln hervorrufen.

16. Verwendung nach Anspruch 15, **dadurch gekennzeichnet, dass** sie in der Präventionsphase und/oder der Ausheilungsphase angewendet werden kann.

17. Herstellungsverfahren der Zusammensetzung nach Anspruch 1 bis 6, **dadurch gekennzeichnet, dass** es ein anfängliches Aussäen in Schalen, die den Mikronährstoff in einem pflanzlichen Extrakt enthalten, mit mindestens zwei *Trichoderma*-Arten in Form reproduktiver Originaleinheiten, und das Ernten der mechanisch erzeugten Biomasse umfasst.

18. Herstellungsverfahren nach Anspruch 17, **dadurch gekennzeichnet, dass** die Saat drei *Trichoderma*-Arten in der Form reproduktiver Originaleinheiten umfasst.

19. Herstellungsverfahren nach Anspruch 18, **dadurch gekennzeichnet, dass** die drei Trichoderma-Arten aus den Stämmen *Trichoderma viridae, Trichoderma longibratum* und *Trichoderma harzianum* ausgewählt sind.

20. Herstellungsverfahren nach Anspruch 19, **dadurch gekennzeichnet, dass** der Anteil der drei Arten 50% *Trichoderma harzianum,* 30% *Trichoderma viridae* und 20% *Trichoderma longibratum* beträgt.

## Revendications

1. Composition bactéricide, bactériostatique et fongicide, **caractérisée en ce qu'**elle comprend deux ou plus de deux espèces vivantes de *Trichoderma* choisies parmi *Trichoderma harzianum, viridae, polysporum, longibratum, koningii* et les variations de celles-ci, obtenues en laboratoire, sur avoine micronisée en tant que moyen solide de culture, identifiées sous le nom de T 22, Tr 115, Tr 116, KRL-AG 2 (Rifai), y compris les holoformes comme *Hypocrea* et *Podostroma,* où la souche de T. *longibratum* a été transformée par exposition à un rayonnement avant d'être mise en contact avec d'autres espèces de *Trichoderma.*

2. Composition selon la revendication 1, **caractérisée en ce qu'**elle comprend deux ou plus de deux espèces de *Trichoderma,* naturelles ou génétiquement modifiées, souches originelles d'espèces de *Trichoderma* et sous-espèces d'une quelconque origine naturelle ou de laboratoire, vivantes et actives dans l'une quelconque de ses phases de croissance végétative, spores de mycélium, fractionnées ou en différentes proportions.

3. Composition selon les revendications 1 à 2, **caractérisée en ce qu'**elle comprend trois espèces vivantes de *Trichoderma.*

4. Composition selon les revendications 1 à 3, **caractérisée en ce qu'**elle comprend trois espèces vivantes de *Trichoderma* choisies parmi les souches *Trichoderma viridae, Trichoderma longibratum* et *Trichoderma harziano.*

5. Composition selon les revendications 1 à 4, **caractérisée en ce que** les trois espèces vivantes de *Trichoderma* sont dans les proportions : 10 : 20 : 70 ou 99 : 05 : 05.

6. Composition selon les revendications 1 à 5, **caractérisée en ce qu'**elle comprend les trois espèces vivantes de *Trichoderma* et un extrait végétal de nature bactériostatique et bactéricide.

7. Composition selon les revendications 1 à 6, **caractérisée en ce que** l'extrait est un extrait hydro-alcoolique de *Rubus sp.*

8. Composition à base de latex pour cicatriser les plaies d'élagage, **caractérisée en ce qu'**elle comprend une base de latex, à laquelle est ajoutée une couleur, et une composition selon l'une quelconque des revendications 1 à 7.

9. Composition à base de latex pour cicatriser les plaies d'élagage, **caractérisée en ce qu'**elle comprend une base de latex, à laquelle n'est pas ajoutée une couleur, et une composition selon l'une quelconque des revendications 1 à 7.

10. Composition selon les revendications 8 et 9, **caractérisée en ce qu'**elle comprend approximativement 60 litres dudit latex et 100 grammes de ladite composition.

11. Utilisation de la composition selon l'une quelconque des revendications de composition précédentes pour protéger des plantes, des sols, des semences, des arbres et/ou des fruits contre l'endommagement par des insectes, des bactéries, des champignons, des virus nuisibles et/ou une combinaison de deux ou plus de deux de ces agents.

12. Utilisation selon la revendication 11, **caractérisée en ce qu'**elle est appliquée sous la forme d'une poudre sèche ou sous la forme d'une suspension aqueuse.

13. Utilisation selon la revendication 11 ou 12, **caractérisée en ce que** l'application est réalisée au moyen de la technique à la volée, par imprégnation des semences, directement sur les plantes, incorporée à des cuves de ferti-irrigation, au moyen de machines arrières, de machines de pulvérisation et de machines électrostatiques.

14. Utilisation selon les revendications 11 à 13, **caractérisée en ce que** la dose appliquée est de 1 kg par hectare, pour chaque 600 litres d'eau.

15. Utilisation non thérapeutique de la composition pour protéger des plantes, des sols, des semences, des arbres et/ou des fruits selon les revendications précédentes 1 à 10 de composition, en tant que fongicide, bactéricide bactériostatique à large spectre d'action sur les champignons et/ou les bactéries qui sont responsables des mycoses et/ou des bactérioses sur les êtres humains et/ou les animaux et/ou les aliments.

16. Utilisation selon la revendication 15, **caractérisée en ce qu'**elle peut être utilisée dans la phase de prévention et/ou la phase curative.

17. Procédure de préparation de la composition selon les revendications 1 à 6, **caractérisée en ce qu'**elle comprend un ensemencement initial sur clayette contenant le micronutriment dans un extrait végétal, avec deux ou plus de deux espèces de *Trichoderma* sous la forme d'unités originelles reproductives et le ramassage de la biomasse générée par des moyens mécaniques.

18. Procédure de préparation selon la revendication 17, **caractérisée en ce que** l'ensemencement comprend trois espèces de *Trichoderma* sous la forme d'unités originelles reproductives.

19. Procédure de préparation selon la revendication 18, **caractérisée en ce que** les trois espèces de *Trichoderma* sont choisies parmi les souches *Trichoderma viridae, Trichoderma longibratum* et *Trichoderma harzianum.*

20. Procédure de préparation selon la revendication 19, **caractérisée en ce que** la proportion des trois espèces est de 50 % de *Trichoderma harzianum,* 30 % de *Trichoderma viridae* et 20 % de *Trichoderma longibratum.*
